Europäisches Patentamt

European Patent Office

Office européen des brevets

(19)

(11)  **EP 1 240 482 B1**

(12)  **FASCICULE DE BREVET EUROPEEN**

| | |
|---|---|
| (45) Date de publication et mention de la délivrance du brevet:<br>**20.08.2003  Bulletin 2003/34** | (51) Int Cl.⁷: **G01F 15/06** |
| (21) Numéro de dépôt: **00946019.7** | (86) Numéro de dépôt international:<br>**PCT/FR00/01785** |
| (22) Date de dépôt: **26.06.2000** | (87) Numéro de publication internationale:<br>**WO 01/001089 (04.01.2001 Gazette 2001/01)** |

(54)  **PROCEDE ET DISPOSITIF DE CONVERSION D'UNE GRANDEUR PHYSIQUE MESURE PAR UN APPAREIL DE MESURE**

VERFAHREN UND VORRICHTUNG ZUR UMWANDLUNG EINER PHYSIKALISCHEN GRÖSSE IN EINEM MESSGERÄT

METHOD AND DEVICE FOR CONVERTING A PHYSICAL QUANTITY MEASURED BY A MEASURING APPARATUS

| | |
|---|---|
| (84) Etats contractants désignés:<br>**AT BE CH CY DE DK ES FI FR GB GR IE IT LI LU MC NL PT SE** | (72) Inventeurs:<br>• **BENETEAU, Lionel**<br>  **F-92260 Fontenay aux Roses (FR)**<br>• **LOUADI, Abdel**<br>  **F-71850 Charnay les Macôn (FR)** |
| (30) Priorité:  **28.06.1999  FR 9908284** | |
| (43) Date de publication de la demande:<br>**18.09.2002  Bulletin 2002/38** | (74) Mandataire: **Feray, Valérie**<br>**Feray Lenne Conseil**<br>**44/52, Rue de la Justice**<br>**75020 Paris (FR)** |
| (73) Titulaire: **SCHLUMBERGER INDUSTRIES S.A.**<br>**92120 Montrouge (FR)** | (56) Documents cités:<br>**US-A- 4 250 449        US-A- 5 198 751** |

## Description

L'invention concerne un procédé et un dispositif de conversion d'une grandeur physique $Q_i$, par exemple un débit, mesurée par un appareil de mesure, par exemple un débitmètre, consistant à générer à partir de la grandeur physique mesurée par ledit appareil de mesure des impulsions électriques représentatives chacune d'une quantité élémentaire P ayant traversée ledit appareil de mesure, la fréquence du signal constitué par les impulsions étant proportionnelle à la valeur de la grandeur physique.

Les constructeurs de compteurs de fluide notamment d'eau, de gaz, ou d'essence tendent de plus en plus à supprimer les pièces mécaniques en mouvement telles que par exemple les turbines dans les compteurs de vitesse ou les pistons rotatifs dans les compteurs volumétriques car de telles pièces s'usent au cours du temps, ce qui conduit à une dégradation des performances des compteurs. Pour remplacer ces compteurs traditionnels, les constructeurs proposent des débitmètres dits statiques comme par exemple : les débitmètres ultrasonore, les débitmètres à oscillateur fluidique, les débitmètres électromagnétique, les débitmètres à vortex. Les capteurs employés dans ces débitmètres peuvent par exemple être des capteurs de pressions, des capteurs thermiques ou des transducteurs ultrasonores.

Dans ces compteurs, le débit n'est pas mesuré en permanence comme dans un compteur traditionnel mais il est échantillonné.

Suivant les applications envisagées il peut être nécessaire de prévoir un dispositif qui convertit le débit échantillonné en un signal de sortie constitué d'impulsions émises suivant une fréquence représentative du débit et où chaque impulsion correspond à un volume élémentaire encore appelé poids d'impulsion, écoulé dans le compteur et mesuré.

Ce signal de sortie permet aux compteurs de communiquer avec l'extérieur par exemple à des fins de tests, d'étalonnage, de télérelevé, ou de régulation.

A titre d'exemple, un tel signal peut être également utilisé dans un intégrateur d'énergie thermique qui, d'une part comptabilise le nombre d'impulsions pendant un temps déterminé pour en déduire le débit mesuré par le compteur et, d'autre part mesure la différence de température de l'eau entre les canalisations d'arrivée et d'évacuation d'eau dans un local en vue de déterminer la quantité d'énergie thermique consommée dans le local.

Les dispositifs de conversion de débit en impulsions sont basés sur l'hypothèse que le débit $Q_i$ reste constant pendant la période d'échantillonnage $T_e$.

Ainsi, connaissant le poids d'impulsion P (en litre) du compteur et la période d'échantillonnage $T_e$ (en seconde), pour un débit $Q_i$ (en litre par heure) donné, le nombre d'impulsions $N_i$ que le dispositif doit générer pendant cette période d'échantillonnage s'écrit $N_i = Q_i \times \dfrac{T_e}{P} \times 3600$.

Cependant, le volume de fluide écoulé durant la période d'échantillonnage n'est pas systématiquement égal à un multiple du poids d'impulsion et, pour chaque conversion d'un débit en impulsions, le calcul du nombre d'impulsions à générer conduit à un nombre entier d'impulsions auquel peut s'ajouter une fraction du poids d'impulsion.

Le document US 5 198 751 décrit un dispositif de génération d'impulsion à partir d'un signal digital résultant de la multiplication d'un courant et d'une tension grâce à des moyens d'addition. Dans ce dispositif, à chaque fois que les moyens d'addition débordent, une impulsion est émise alors que les moyens d'addition sont remis à zéro.

Le document US 4 250 449 décrit un dispositif de génération d'impulsion représentant chacune une quantité d'énergie élémentaire. Le signal représentant le courant est converti en un premier train d'impulsions dont la fréquence est proportionnelle à l'amplitude du signal. Le signal représentant la tension est converti en un second train d'impulsions dont la fréquence est proportionnelle à l'amplitude du signal laquelle est utilisée pour contrôler l'addition de la composante représentant le courant.

Dans de tels dispositifs, la fraction du poids d'impulsion n'est pas comptabilisée pour la période d'échantillonnage considérée. Cette fraction non comptabilisée représente par conséquent une erreur lors de la conversion du débit en impulsions.

Le problème à la base de l'invention est de pouvoir gérer de manière fiable cette erreur représentant une fraction du poids d'impulsion, en particulier de la minimiser pour améliorer la précision des mesures. De plus, il serait aussi intéressant d'améliorer la régularité des impulsions, en particulier éviter l'apparition de "trou" dans le signal lors du passage d'une mesure à une autre. Enfin, le dispositif devra être particulièrement économe du point de vue de la consommation électrique.

La présente invention atteint ce but et a ainsi pour objet un procédé de conversion d'une grandeur physique $Q_i$ mesurée par un appareil de mesure, en impulsions électriques représentatives chacune d'une quantité élémentaire P, ledit procédé comportant les étapes suivantes :

- mesurer la grandeur physique $Q_i$ à une fréquence d'échantillonnage $\underline{fe}$;
- calculer et coder sur un nombre $\underline{r}$ de bits, un entier $n_i$ correspondant à la grandeur physique $Q_i$;

ledit procédé étant caractérisé en ce qu'il comporte en outre les étapes suivantes :

- additionner $m_i$ fois l'entier $n_i$ à lui-même à une fréquence d'addition f, grâce à des moyens d'addition dont la capacité de stockage est limitée à t = $2^r$, $m_i$ correspondant au nombre d'additions à effectuer pour dépasser la capacité de stockage t des moyens d'addition pour une valeur de $n_i$ donnée;
- générer lorsque la capacité de stockage des moyens d'addition est dépassée, d'une part une impulsion électrique et, d'autre part une erreur de fractionnement $x_i$ lorsque le rapport $Q_i / P$ n'est pas égal à un entier, de telle sorte que $x_i = (m_i \times n_i)/t$;
- reporter ladite erreur de fractionnement $x_i$ à une entrée des moyens d'addition pour l'additionner à l'entier $n_i$ si aucune nouvelle grandeur physique n'a été mesurée, ou à un nouvel entier $n_{i+1}$ représentatif d'une nouvelle grandeur physique mesurée $Q_{i+1}$ si une nouvelle grandeur physique a été mesurée; et
- répéter l'étape de génération d'impulsion électrique et d'erreur de fractionnement en sortie des moyens d'addition, et de report de l'erreur de fractionnement à l'entrée des moyens d'addition.

Le procédé selon l'invention peut être mis en oeuvre par des moyens matériels incluant par exemple un additionneur logique ou sous la forme d'étapes programmées dans un microprocesseur.

Le procédé selon l'invention consiste à effectuer les opérations d'addition et de report à la fréquence d'addition f. Avantageusement, le procédé consiste à générer un signal de commande PSY dont la fréquence est la fréquence d'échantillonnage fe, ledit signal déclenchant à la fois les étapes de mesure d'une grandeur physique $Q_i$, d'addition de l'entier $n_i$, et de sélection de la fréquence f du signal d'addition AF.

En outre, le procédé selon l'invention peut également consister à asservir la fréquence f du signal d'addition AF à la valeur de la grandeur physique mesurée.

L'invention a également pour objet un dispositif de conversion d'une grandeur physique $Q_i$ mesurée à une fréquence d'échantillonnage fe par un appareil de mesure, en impulsions électriques représentatives chacune d'une quantité élémentaire P, ledit dispositif comportant :

- une unité de calcul reliée à la sortie de l'appareil de mesure destinée à calculer et à coder sur un nombre r de bits, un entier $n_i$ correspondant à la grandeur physique $Q_i$; et
- une unité de conversion reliée à la sortie de l'unité de calcul, destinée à générer une impulsion à chaque fois qu'une quantité élémentaire P a traversé l'appareil de mesure, l'ensemble des impulsions constituant un signal IMP dont la fréquence est représentative de la grandeur physique, ladite unité de conversion étant caractérisée en ce qu'elle comprend des moyens d'addition dont la capacité de stockage est limitée à t = $2^r$, comportant deux entrées $E_1$ et $E_2$, et deux sorties $S_1$ et $S_2$ :
- l'entrée $E_1$ étant reliée à l'unité de calcul et recevant l'entier $n_i$;
- la sortie $S_1$ fournissant soit le résultat de l'addition des deux entrées, soit une erreur de fractionnement $x_i$ lorsque le rapport $Q_i/P$ n'est pas égal à un entier et que la capacité de stockage des moyens d'addition est dépassée;
- l'entrée $E_2$ étant reliée à la sortie $S_1$ afin que le résultat de la sortie $S_1$ soit reporté à l'entrée $E_2$, de telle sorte que d'une part les moyens d'addition puissent additionner $m_i$ fois l'entier $n_i$ à lui même, $m_i$ correspondant au nombre d'addition à effectuer pour dépasser la capacité de stockage t des moyens d'addition, et d'autre part que l'erreur de fractionnement $x_i$ généré à la sortie $S_1$ puisse être reportée à l'entrée $E_2$; et
- la sortie $S_2$ générant le signal IMP lorsque la capacité de stockage des moyens d'addition est dépassée.

Le dispositif selon l'invention permet de gérer et de reporter automatiquement cette erreur dès que la capacité de stockage de l'unité de traitement est atteinte et, au bout d'un certain nombre de périodes d'échantillonnage, l'erreur finit par être moyennée.

De façon avantageuse, le dispositif comprend également des moyens de sélection d'un signal d'addition AF de fréquence f à laquelle sont effectuées les additions et les reports, ladite fréquence f étant asservie à la valeur de la grandeur physique $Q_i$ mesurée. Ainsi, toutes les additions sont effectuées de manière "automatique" à la fréquence f prédéterminée. Ceci permet d'obtenir une incertitude constante égale à l/f sur la période de sortie des impulsions électriques. En choisissant une fréquence d'addition élevée il est donc possible de diminuer cette incertitude et donc d'augmenter la régularité des impulsions. Si le problème de la consommation électrique n'est pas rédhibitoire l'incertitude sur la période de sortie des impulsions électriques peut donc être considérablement réduite. Par ailleurs, l'asservissement présente l'avantage d'accroître la précision du dispositif selon l'invention et de réduire sa consommation électrique.

Les moyens de sélection sont commandés par un signal de commande PSY.

De façon plus précise, les moyens de sélection comportent un décodeur relié à l'unité de calcul, un circuit de verrouillage dont les entrées sont reliées au décodeur, un ensemble de portes logiques de type "ET" comprenant deux entrées, l'une recevant un signal de fréquence prédéterminée, l'autre un signal de sélection provenant du décodeur et destiné à activer une seule desdites portes logique de type "ET", et une porte logique de type "OU" reliée à chacune des sorties des portes logiques de type "ET" et délivrant en sortie le signal de fréquence prédéterminée fourni par l'une desdites portes logiques de type "ET".

Avantageusement, c'est l'unité de calcul qui commande l'envoie par le décodeur du signal de sélection destiné à activer l'une des portes logiques de type "ET".

Selon une caractéristique de l'invention, les moyens d'addition sont constitués par des additionneurs logiques, ce qui permet d'offrir une consommation électrique réduite par rapport à une solution mise en oeuvre sous la forme d'étapes programmées dans un microprocesseur et nécessitant plus de calculs que dans l'additionneur logique.

L'unité de conversion comprend des premiers moyens de verrouillage disposés entre l'unité de calcul de l'entier $n_i$ et l'entrée E, des moyens d'addition, lesdits premiers moyens de verrouillage autorisant l'accès dudit entier $n_i$ vers les moyens d'addition sous le contrôle d'un signal de commande PSY. L'unité de conversion comprend également des deuxièmes moyens de verrouillage disposés entre les premiers moyens de verrouillage et l'entrée $E_1$ des moyens d'addition qui reçoivent l'entier $n_i$ lorsque l'autorisation d'accès est donnée par le signal de commande PSY, lesdits deuxième moyens de verrouillage autorisant le report de cet entier à l'entrée $E_1$ des moyens d'addition au rythme de la fréquence $\underline{f}$ du signal d'addition AF. Par ailleurs, il est aussi prévu des troisièmes moyens de verrouillage disposés entre la sortie S1 et l'entrée $E_2$ des moyens d'addition, lesdits moyens de verrouillage autorisant le report de la valeur de la sortie S1 à l'entrée $E_2$ au rythme de la fréquence $\underline{f}$ du signal d'addition AF.

Au moins un moyen parmi les premiers, deuxièmes et troisièmes moyens de verrouillage est constitué de bascules. D'autres moyens connus de l'homme du métier sont bien évidemment possible.

Dans le cas du dispositif comme dans celui du procédé, l'entier $n_i$ est égal à

$$E\left(\frac{t \times Q_i}{f \times P} + \alpha\right)$$

et $0 \leq \alpha < 1$, où E(a) désigne la fonction mathématique partie entière de a.

D'autres caractéristiques et avantages apparaîtront au cours de la description qui va suivre donnée à titre d'exemple non limitatif et faite en référence aux dessins annexés sur lesquels :

- la figure 1 est un schéma d'ensemble du dispositif selon l'invention,
- la figure 2 illustre de manière schématique l'unité de conversion 20 de la figure 1,
- la figure 3 est un ensemble de chronogrammes représentant les signaux AF et PSY ainsi que le signal IMP,
- la figure 4 illustre schématiquement les moyens nécessaires pour générer le signal PSY et les signaux de fréquences comprises entre 4 et 1024Hz,
- la figure 5 est un schéma détaillé de l'unité de conversion 20 de la figure 1,
- la figure 6 donne l'allure de la fonction d'erreur Erq(N),
- la figure 7 est une vue schématique des moyens 30 de sélection d'une fréquence d'addition f du signal AF.

Le procédé et le dispositif va être décrit en prenant comme exemple un débitmètre.

Néanmoins, le procédé et le dispositif s'applique à tout type d'appareil de mesure dans lequel la grandeur physique mesurée est échantillonnée puis traitée et exploitée de façon numérique. Dans l'ensemble de la description qui va suivre, les références suivantes désignent :

- Qi la valeur du débit mesuré,
- ni l'entier représentatif du débit Qi,
- xi l'erreur de fractionnement,
- mi le nombre d'addition nécessaire pour générer une impulsion.
- t la capacité de stockage des moyens d'addition,
- r le nombre de bits,

Par ailleurs, un état bas et un état haut correspondent respectivement à un "0" logique et à un "1" logique.

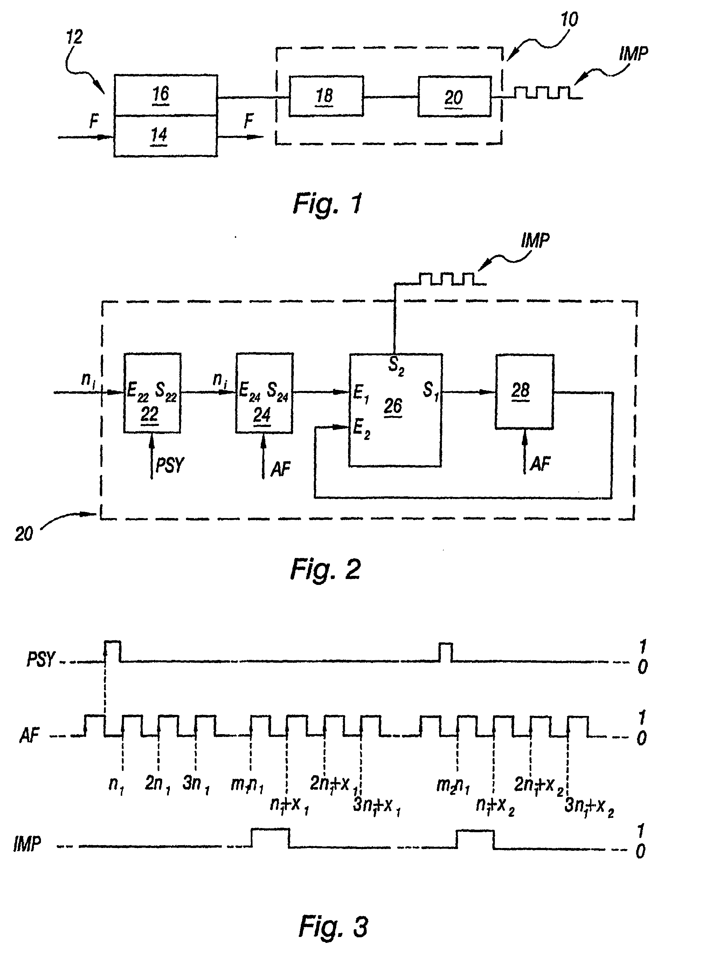

La figure 1 représente schématiquement le dispositif de génération d'impulsions électriques ou convertisseur débit/fréquence selon l'invention et qui est désigné par la référence générale notée 10.

Le convertisseur 10 est disposé en aval d'un débitmètre 12, lequel comprend une unité de mesure 14 dans laquelle s'écoule un fluide représenté par la flèche référencée F et une électronique de mesure 16 qui fournit une mesure de débit $Q_i$ et du volume V de fluide.

Le convertisseur 10 comprend une unité de calcul 18, par exemple un microprocesseur, qui reçoit le débit $Q_i$ mesuré par le débitmètre 12 et le transforme en un entier $n_i$ représentatif du débit $Q_i$ avant de le diriger sur une unité de conversion 20 qui va effectuer la conversion de cet entier $n_i$ en impulsions électriques représentatives chacune d'un volume de fluide élémentaire P écoulé dans le débitmètre. Plus le débit mesuré est important et plus le nombre d'impulsions générées est important et vice versa. La fréquence du signal IMP généré est alors directement proportionnelle au débit $Q_i$ mesuré.

L'entier $n_i$ est par exemple codés sur 16 bits, 1 bit correspondant par exemple à 0 V ou 3 V.

Il convient de noter que l'ensemble comprenant l'unité de calcul 18 et l'unité de conversion 20 peut être intégré dans l'électronique de mesure 16.

Ces impulsions peuvent être utilisées de façon avantageuse, sur un banc de test, dans un intégrateur d'énergie thermique ou encore dans un appareil de régulation.

A titre d'exemple, lorsque le débitmètre 12 de poids d'impulsion donné est placé sur un banc de test il va être testé sur un nombre N prédéterminé d'impulsions, par exemple 1000 impulsions. Le test consiste d'abord à fixer un débit de fluide $Q_i$, par exemple au moyen d'une installation équipée d'un piston, ce qui va déterminer le nombre d'impulsions N pour le test, puis à déterminer l'erreur réalisée sur le débit du fait du compteur et du convertisseur 10 après génération de ces N impulsions.

L'erreur provient de deux sources différentes : la première résulte de la méthode utilisée par le compteur pour la mesure elle-même et la seconde trouve son origine dans la conversion du débit mesuré en impulsions électriques. La présente invention permet d'agir sur le second type d'erreur.

Comme représenté sur la figure 3 un signal PSY de fréquence $\underline{fe}$ présente un front montant toutes les deux secondes par exemple, cet intervalle de temps séparant deux échantillonnages successifs du débit de fluide.

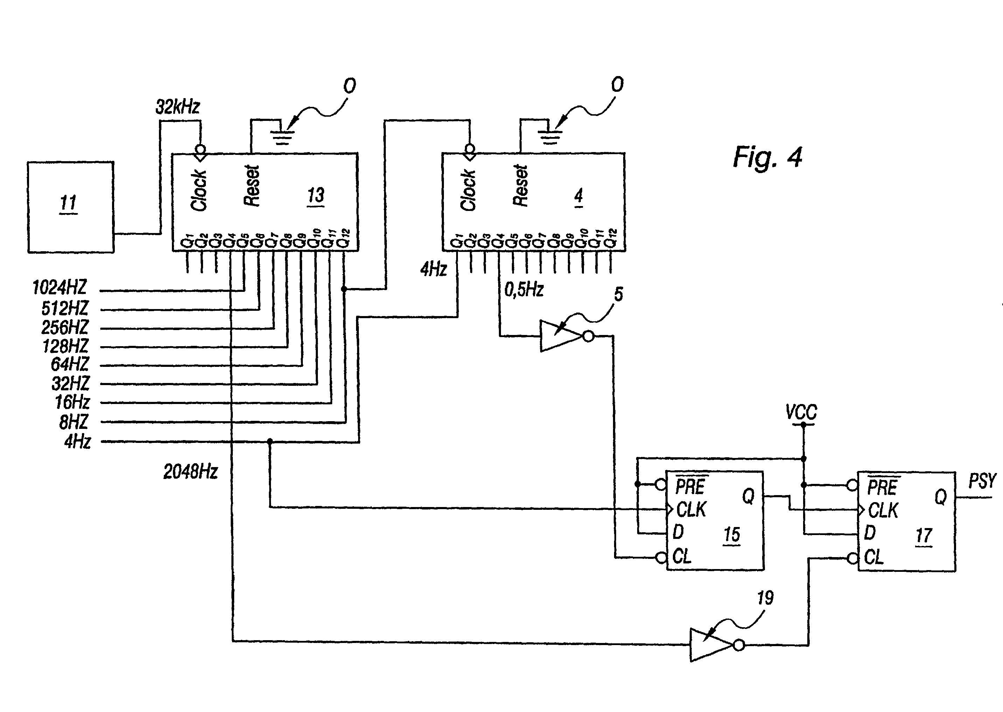

Le signal PSY est généré de la manière indiquée schématiquement sur la figure 4. Un oscillateur 11 fournissant un signal de fréquence 32 kHz envoie un signal par exemple un signal carré vers l'entrée Clock d'un compteur 12bits référencé 13 qui effectue une division de la fréquence de ce signal et délivre, aux sorties $Q_5$ à $Q_{12}$, des signaux de fréquences respectives égales à 1024, 512, 256, 128, 64, 32, 16 et 8 Hz. Les sorties $Q_1$ à $Q_3$ sont en l'air. L'entrée Reset est branchée à la masse 0. La sortie $Q_{12}$ du compteur 13 est également branchée sur l'entrée Clock d'un compteur 12 bits référencé 4. L'entrée Reset du compteur 4 est branchée à la masse 0. La sortie $Q_1$ du compteur 4 délivre un signal de fréquence égale à 4 Hz, et la sortie $Q_4$ un signal de fréquence égale à 0,5Hz.

Une bascule 15 de type D reçoit sur son entrée CLK, connectée à la sortie $Q_1$ du compteur 4, le signal de fréquence égale à 4Hz et reçoit sur son entrée inverseuse CL, le signal de la sortie $Q_4$ du compteur 4 préalablement inversé par l'inverseur 5 et de fréquence 0,5Hz. L'entrée inverseuse $\overline{PRE}$ et l'entrée D sont toutes deux connectées à une source de tension Vcc.

La bascule 15 délivre en sortie Q un signal qui est envoyé sur l'entrée CLK d'une deuxième bascule 17 de type D. L'entrée inverseuse $\overline{PRE}$ et l'entrée D de cette deuxième bascule 17 sont également connectées à la source de tension Vcc.

Un signal issu de la sortie Q4 du compteur 13, de fréquence 2048Hz est envoyé sur un circuit logique inverseur 19 dont la sortie est reliée à l'entrée inverseuse CL de la deuxième bascule 17.

La formation du signal PSY, représenté à la figure 3, résulte du fonctionnement des bascules 15 et 17 de type D. Le passage d'un état bas à un état haut du signal PSY est commandé par le signal injecté sur les entrées inverseuses CL des bascules 15 et 17.

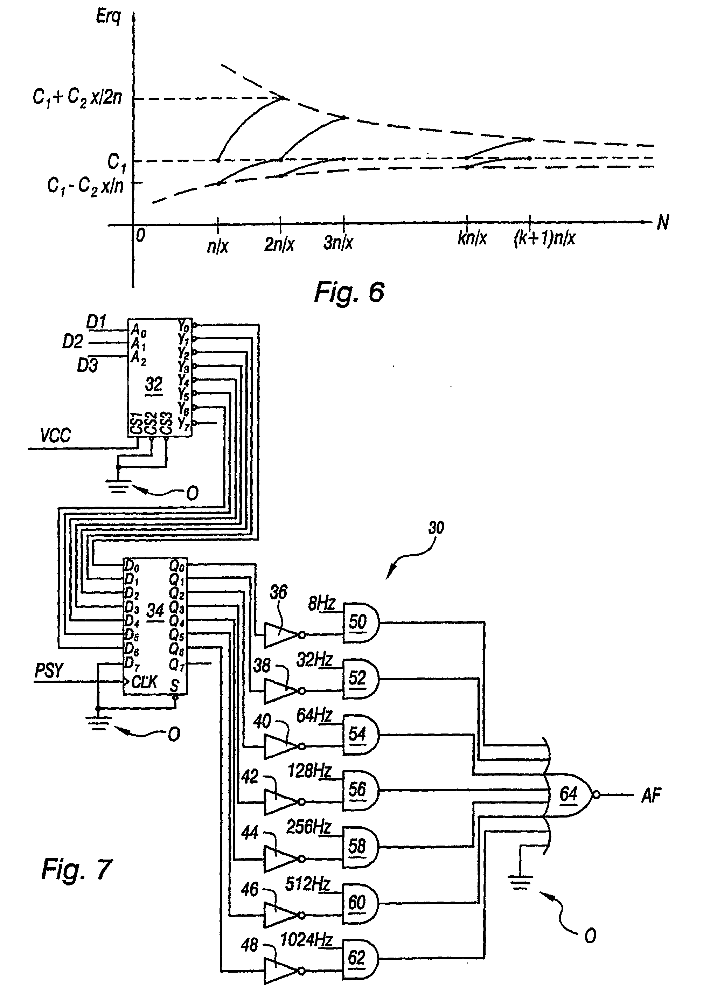

Ainsi, le signal PSY à la sortie Q de la bascule 17, passe d'un état haut lorsque l'entrée CL est dans un état haut et que l'entrée CLK est soumise à un front montant; le signal PSY passe dans un état bas lorsque l'entrée CL est dans un état bas et ce quelque soit l'état de l'entrée CLK. Le signal PSY représente le signal d'échantillonnage du débit de fluide. Chaque fois que le signal passe d'un état bas à un état haut, une mesure du débit est effectuée ce qui donne lieu au calcul d'un entier $n_i$. Le signal PSY sert aussi de signal de commande à l'ensemble de l'unité de traitement 20 afin de déclencher la conversion de l'entier $n_i$ en impulsions électriques. La formation du signal d'addition AF de fréquence f, représenté à la figure 3, ce signal correspondant à l'un des signaux de fréquences comprises entre 8 et 1024Hz sera expliqué ultérieurement. En particulier, la sélection de la fréquence du signal AF sera décrite en référence à la figure 7.

Comme représenté sur la figure 2, l'unité de conversion 20 selon l'invention comprend des premiers moyens de verrouillage 22 comportant une entrée $E_{22}$ et une sortie $S_{22}$. L'entrée $E_{22}$ est reliée à l'unité de calcul 18 et reçoit l'entier $n_i$. Ces premiers moyens sont destinés à mémoriser l'entier $n_i$ et à autoriser son report à la sortie $S_{22}$ sous le contrôle du signal de commande PSY. Cette autorisation est donnée par le front montant du signal PSY (voir figure 3), c'est a dire lors du passage d'un état bas à un état haut.

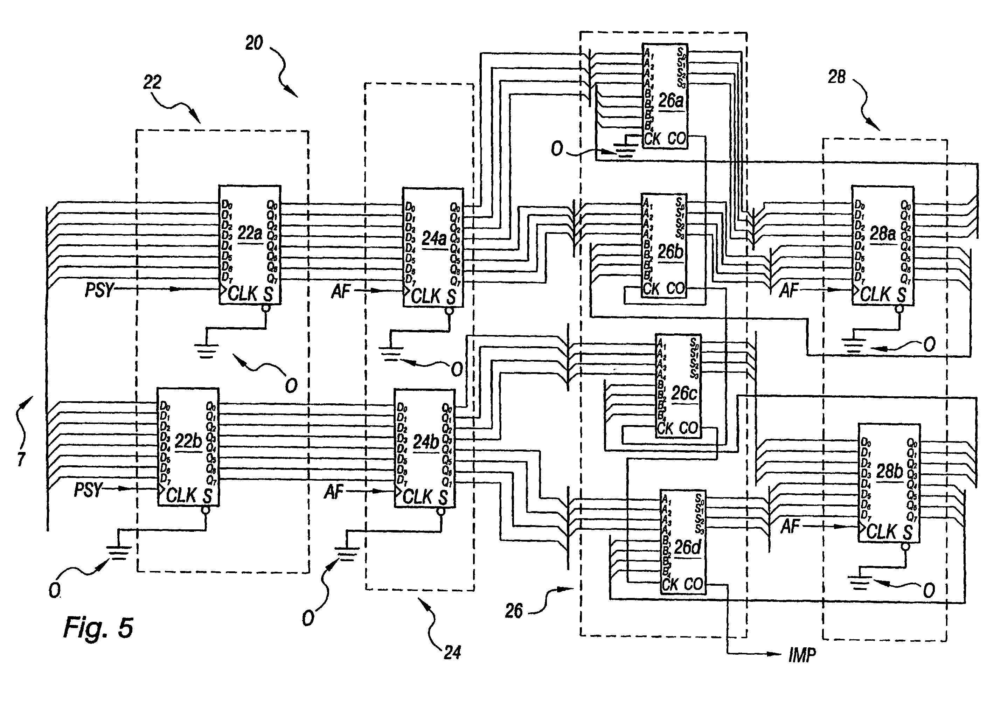

La figure 5 représente de manière plus détaillée l'unité de conversion 20 de la figure 2. La figure 5 correspond à un exemple de réalisation particulier où l'entier $n_i$ est codé sur 16 bits et l'ensemble du dispositif fonctionne sur 16 bits. Cependant, il est aisé pour l'homme du métier de modifier le dispositif pour que le codage et le fonctionnement s'effectue sur un nombre de bits différents de 16.

L'entier $n_i$ codé sur 16 bits par le microprocesseur 18 est envoyé via un bus 16 bits référencé 7 sur les premiers moyens de verrouillage 22 qui comprennent deux composants 22a, 22b réalisant chacun un circuit de verrouillage. Chaque composant 22a, 22b possède huit entrées $D_0$ à $D_7$ recevant respectivement les huit premiers et les huit derniers bits

de l'entier $n_i$ et huit sorties $Q_0$ à $Q_7$ recopiant les valeurs présentées sur les entrées respectives.

Chaque composant possède également une entrée d'horloge CLK qui reçoit le signal de commande PSY. Les composants 22a et 22b sont chacun connectés à la masse 0 par leurs entrées S.

Ainsi, les valeurs présent sur les entrées $D_0$ à $D_7$ sont recopiées sur les sorties $Q_0$ à $Q_7$ lorsque l'entrée CLK est soumis au front montant du signal PSY.

Comme représenté sur la figure 2, l'unité de conversion 20 comprend également des deuxièmes moyens de verrouillage 24 localisés en aval des premiers moyens de verrouillage 22 destinés à mémoriser l'entier $n_i$ et à autoriser son report aux moyens d'addition 26 située en aval lorsque, d'une part le signal de commande PSY a déverrouillé lesdits premiers moyens de verrouillage et, d'autre part un front montant du signal d'addition AF de fréquence f se présente.

Comme représenté sur la figure 2, la sortie $S_{22}$ des premier moyens de verrouillage 22 est reliée à l'entrée $E_{24}$ des deuxièmes moyens de verrouillage 24. Ces deuxièmes moyens sont destinés à mémoriser l'entier $n_i$ et à autoriser son report à la sortie $S_{24}$ sous le contrôle du signal d'addition AF. Cette autorisation est donnée par le front montant du signal AF (voir figure 3), c'est à dire lors du passage d'un état bas à un état haut.

Comme représenté de manière encore plus détaillée à la figure 5, les deuxièmes moyens 24 comprennent de manière analogue aux premiers moyens 22 deux composants électroniques 24a et 24b réalisant chacun un circuit de verrouillage. Chaque composant 24a, 24b possède, d'une part huit entrées $D_0$ à $D_7$ respectivement connectées aux sorties $Q_0$ à $Q_7$ des composants 22a, 22b, et d'autre part une entrée d'horloge CLK qui reçoit le signal d'addition AF de fréquence f. Les composants 24a, 24b sont chacun connectés à la masse 0 par leurs entrées S.

Ainsi, les valeurs présent sur les entrées $D_0$ à $D_7$ sont recopiées sur les sorties $Q_0$ à $Q_7$ lorsque l'entrée CLK est soumis au front montant du signal AF.

Les premiers et deuxièmes moyens de verrouillage présentent l'avantage d'être particulièrement simples. Des moyens équivalents aux premiers et deuxièmes moyens de verrouillage 22 et 24 permettent de réaliser la fonction de ceux-ci, ces moyens peuvent par exemple être des bascules de type D connectées entre elles de manière connue par l'homme du métier.

Les premiers et deuxièmes moyens ont donc pour fonction de permettre le report d'une façon cadencée de l'entier $n_i$ de la sortie du microprocesseur 18 vers l'entrée des moyens d'addition 26 en tenant compte de la fréquence d'échantillonnage $\underline{fe}$ et de la fréquence d'addition $\underline{f}$.

Comme représenté sur la figure 2, le convertisseur 10 comprend également des moyens d'addition 26 qui effectue la conversion de l'entier $n_i$ en impulsions électriques. Les moyens d'addition 26 sont par exemple constitués par un additionneur logique qui possède deux entrées $E_1$, $E_2$ et deux sorties $S_1$, $S_2$. L'entrée $E_1$ reçoit l'entier $n_i$ après déverrouillage des premiers 22 et seconds moyens de verrouillage 24. La sortie $S_1$ fournit soit le résultat de l'addition des deux entrées $E_1$, $E_2$, soit l'erreur de fractionnement $x_i$. La deuxième entrée $E_2$ de l'additionneur logique 26 est reliée indirectement à la première sortie $S_1$ par des troisièmes moyens de verrouillage 28 qui mémorisent la valeur de la sortie $S_1$ et autorisent son report sur l'entrée $E_2$ lorsqu'un front montant du signal d'addition AF de fréquence f se présente. La sortie $S_2$ fournit les impulsions électriques issues de la conversion.

L'additionneur 26 est représenté plus en détail sur la figure 5, il comprend quatre additionneurs logiques 4 bits référencés 26a, 26b, 26c et 26d.

Chaque additionneur possède, d'une part quatre entrées $A_1$ à $A_4$ qui reçoivent respectivement quatre des seize bits de l'entier $n_i$ provenant des seize sorties $Q_0$ à $Q_7$ des deux composants 24a, 24b et, d'autre part une sortie CO qui est reliée respectivement pour chacun des additionneurs 26a, 26b et 26c à l'entrée CK des additionneurs 26b, 26c et 26d. L'entrée CK de l'additionneur 26a est reliée à la masse tandis que la sortie CO de l'additionneur 26d génère les impulsions constituant le signal IMP.

Cet agencement des additionneurs permet d'effectuer une addition sur 16 bits à partir de quatre additions sur 4 bits. Il faut remarquer que l'utilisation d'un additionneur 16 bits ou un agencement de plusieurs additionneurs de taille réduite par exemple 2 bits, auraient également été possible.

Les troisièmes moyens de verrouillage 28 comprennent deux composants électroniques 28a, 28b réalisant chacun un circuit de verrouillage.

Le composant 28a possède huit entrées $D_0$ à $D_7$. les entrées $D_0$ à $D_3$ étant connectées aux sorties $S_0$ à $S_3$ de l'additionneur logique 26a, alors que les entrées $D_4$ à $D_7$ sont connectées aux sorties $S_0$ à $S_3$ de l'additionneur 26b.

De même, le composant 28b possède huit entrées, les entrées $D_0$ à $D_3$ étant connectées aux sorties $S_0$ à $S_3$ de l'additionneur logique 26c, alors que les entrées $D_4$ à $D_7$ sont connectées aux sorties $S_0$ à $S_3$ de l'additionneur 26d.

Le composant 28a possède également huit sorties $Q_0$ à $Q_7$ dont les quatre premières sont reliées à quatre entrées $B_1$ à $B_4$ d'un additionneur 26a et les quatre dernières sont reliées à quatre entrées $B_1$ à $B_4$ de l'additionneur 26b.

De même, le composant 28b possède huit sorties $Q_0$ à $Q_7$ dont les quatre premières sont reliées à quatre entrées $B_1$ à $B_4$ d'un additionneur 26c et les quatre dernières sont reliées à quatre entrées $B_1$ à $B_4$ de l'additionneur 26d.

En outre, chaque composant 28a, 28b possède une entrée CLK recevant le signal d'addition AF de fréquence f.

Les composants 28a, 28b sont connectés chacun à la masse 0 par leurs entrées S.

On va maintenant décrire le procédé de génération d'impulsions électriques mis en oeuvre par le convertisseur 10 représenté sur les figures 1 et 2.

Il convient de noter que ce procédé pourrait également être mis en oeuvre par un logiciel. Toutefois, cette solution augmenterait la consommation électrique, nécessiterait l'emploi d'un microcontrôleur plus coûteux et occasionnerait davantage de calculs.

On désigne par $t = 2^r$ la capacité de stockage de l'additionneur logique 26 où r désigne le nombre de bits, par exemple r = 16 bits.

Lors de la mesure d'un premier débit, i = 1 et le débit $Q_i = Q_1$ est mesuré par le débitmètre 12 et transformé par l'unité de calcul 18 en un entier $n_1$ qui est chargé à l'entrée du dispositif de génération d'impulsions électriques 20.

Lorsque le signal de commande PSY l'autorise et dès le premier font montant suivant du signal d'addition AF de fréquence f, les premiers et deuxièmes moyens de mémorisation 22 et 24 libèrent respectivement l'entier $n_1$ qui est chargé à l'entrée $E_1$ de l'additionneur logique 26 et cette valeur est reportée à la sortie S, qui, elle-même, reporte cette valeur sur l'entrée $E_2$ dès que le front montant du signal d'addition AF de fréquence f se présente et libère les troisièmes moyens 28.

L'additionneur logique 26 reçoit alors l'entier $n_1$ sur chacune des entrées $E_1$ et $E_2$ et réalise, au rythme du signal d'addition AF (comme le montre la figure 3), l'addition $n_1 + n_1$ et reporte ensuite cette valeur $2n_1$ sur la sortie $S_1$ et donc sur l'entrée $E_2$ lors du prochain front montant du signal d'addition AF de fréquence f. L'additionneur logique 26 recevant l'entier $n_1$ sur l'entrée $E_1$ et l'entier $2n_1$ sur l'entrée $E_2$, réalise l'addition $n_1 + 2n_1$, et ainsi de suite jusqu'à l'addition dont le résultat est $m_1 n_1$ et qui dépasse la capacité de stockage t dudit additionneur. A ce moment l'additionneur "déborde" en générant, d'une part une impulsion électrique IMP sur la sortie $S_2$ et, d'autre part en sortie $S_1$ une erreur $x_1$ dite de fractionnement. Cette erreur provient du fait que le rapport $Q_1/P$ n'est pas égal à un entier et correspond donc à une fraction du poids d'impulsion P qui n'a pas pu être prise en compte dans l'impulsion générée. L'erreur $x_1$ vérifie la relation :

$$m_1 \times n_1 = t + x_1,$$

avec $0 \le x_1 < n_1$

Si $x_1 = 0$ cela correspond à la situation où une impulsion IMP est générée mais sans aucune erreur due à la conversion. L'erreur $x_1$ est ensuite reportée de la sortie $S_1$ à l'entrée $E_2$ au rythme de la fréquence f et va s'additionner à l'entier $n_1$ chargé sur l'entrée $E_1$ et, au bout de $m_2$ additions, l'additionneur "déborde" une nouvelle fois en générant une autre impulsion électrique IMP ainsi qu'une autre erreur de fractionnement $x_2$ vérifiant la relation :

$$x_1 + m_2 \times n_1 = t + x_2,$$

avec $0 \le x_2 < n_1$

Au bout de la ième impulsion générée, l'erreur de fractionnement étant notée $x_i$, la relation s'écrit :

$$x_{i-1} + m_i \times n_1 = t + x_i,$$

avec $0 \le x_1 < n_1$

Lorsque le débit est à nouveau échantillonné et prend la valeur $Q_2$, un nouvel entier $n_2$ représentatif de ce débit est calculé et est chargé à l'entrée $E_1$ de l'additionneur à la place de l'entier $n_1$ et les opérations d'addition, de report de l'errcur et de génération d'impulsions se déroulent de la même manière que décrit précédemment.

La Demanderesse s'est ainsi aperçue, que l'erreur de fractionnement est gérée automatiquement par l'additionneur logique au rythme de la fréquence d'addition f du signal AF qui cadence les opérations d'addition et donc que cette erreur est toujours prise en compte.

En prenant l'exemple de génération de trois impulsions, on trouve :

$$\begin{cases} m_1 n_1 = t + x_1 & 0 \le x_1 < n_1 \\ x_1 + m_2 n_1 = t + x_2 \text{ , avec } 0 \le x_2 < n_1 \\ x_2 + m_3 n_1 = t + x_3 & 0 \le x_3 < n_1 \end{cases}$$

De ces équations on en déduit après simplification :

$$\begin{cases} -2 < m_2 - m_1 < 1 \\ -2 < m_3 - m_1 < 1 \end{cases}, \text{donc } \begin{cases} m_2 = m_1 \\ m_3 = m_1 \end{cases}, \text{ou } \begin{cases} m_2 = m_1 - 1 \\ m_3 = m_1 - 1 \end{cases}$$

ce qui signifie que la période entre deux impulsions est donc $m_1/f$ ou $(m_1-1)/f$.

On peut ainsi constater qu'en gérant l'erreur de fractionnement comme le préconise l'invention la période de sortie des impulsions générées par le convertisseur 10 est obtenue avec une incertitude constante de $1/f$, ce qui donne de meilleurs résultats que ceux obtenus par une méthode d'échantillonnage classique.

Intéressons nous maintenant à la relation liant l'entier $n_i$ au débit $Q_i$.

Le calcul direct de $n_i$ ne donne pas systématiquement une valeur entière et, pour cette raison, on prend comme valeur :

$$N = E\left( \frac{t \times Q_i}{3600 \times f \times P} + \alpha \right),$$

où $0 \leq \alpha < 1$, où E(a) désigne la fonction mathématique partie entière de a.

La valeur de n fluctue en fonction des variations du débit $Q_i$ et $\alpha$ est un coefficient que l'on choisit entre 0 et 1.

Afin de s'approcher le plus rapidement possible de la vraie valeur de $n_i$, on prend le coefficient $\alpha$ égal à 0,5.

Lorsque le compteur de fluide équipé du convertisseur 10 selon l'invention est placé sur un banc de tests, celui-ci calcule un débit $Q_h$ à partir de N impulsions électriques de sortie, l'erreur relative introduite sur le débit par le convertisseur 10 pendant le temps de test (N impulsions) s'écrit en % : $Erq = 100 (Q - Q_b) / Q_b$, où Q correspond au débit réel envoyé dans le compteur par le banc de test.

Après calculs et simplifications qu'il n'est pas nécessaire de développer ici pour ne pas alourdir l'exposé, l'erreur maximale que l'on peut obtenir pour un débit donné s'exprime en valeur absolue sous la forme :

$$|Erq| = 100 \times \max(|E_1|; |E_2|),$$

avec

$$\begin{cases} E_1 = \dfrac{Q}{3600 \times P \times f} \times \left( m - \dfrac{E \times N \times x}{n} \Big/ N \right) - 1 \\ E_2 = \dfrac{Q}{3600 \times P \times f} \times \left( m - \left( 1 + \dfrac{E \times N \times x}{n} \right) \Big/ N \right) - 1 \end{cases},$$

et

où max(a,b) désigne la fonction mathématique qui correspond au maximum entre a et b.

L'exposé qui suit va permettre de comprendre la méthode qui est utilisée pour s'assurer que l'erreur sur le débit introduite par le dispositif de génération d'impulsions électriques est inférieure à X%.

$E_1$ et $E_2$ peuvent respectivement s'écrire :

$$\begin{cases} E_1 = C_1 + C_2 \times \left( \dfrac{x}{n} - \dfrac{E \times N \times x}{n} \Big/ N \right) \\ E_2 = C_1 + C_2 \times \left( \dfrac{x}{n} - \left( 1 + \dfrac{E \times N \times x}{n} \right) \Big/ N \right) \end{cases}, \text{avec } \begin{cases} C_1 = \dfrac{Q \times t}{3600 \times P \times f \times n} - 1 \\ C_2 = \dfrac{Q \times t}{3600 \times P \times f} \end{cases}$$

Les expressions de $E_1$ et $E_2$ peuvent se simplifier en notant $k = \dfrac{E \times N \times x}{n}$, d'où

$$\begin{cases} E_1 = C_1 + C_2 \times \left( \dfrac{x}{n} - \dfrac{k}{N} \right) \\ E_2 = C_1 + C_2 \times \left( \dfrac{x}{n} - \dfrac{1+k}{N} \right) \end{cases}$$

Si l'on considère f, P, t et Q fixés, l'allure de la fonction mathématique Erq en fonction du nombre d'impulsions N est donnée à la figure 6.

D'après cette figure on s'aperçoit que l'erreur maximale Erq se moyenne et tend vers la valeur $C_1$ au bout d'un nombre d'impulsions infini.

Par ailleurs, si l'on veut avoir une erreur maximale |Erq| inférieure à X%, il faut et il suffit que les relations suivantes soient vérifiées :

$$\frac{1 - \alpha}{X} < n \qquad\qquad (1)$$

$$\frac{\alpha}{X} < n \qquad\qquad (2)$$

$$N_{min\ 1} = t \times \frac{n + 1 - \alpha}{X - (1 - \alpha)\,n} < N \qquad\qquad (3)$$

$$N_{min\ 2} = t \times \frac{n + 1 - \alpha}{X - \alpha\,n} < N \qquad\qquad (4)$$

Il peut être observé que le choix de $\alpha$ = 0,5 qui a été mentionné plus haut s'explique à partir des inéquations (3) et (4) où l'on constate que les fonctions $N_{min1}$ et $N_{min2}$ dépendantes de $\alpha$, sont minimales pour $\alpha$ = 0,5.

Ceci signifie donc qu'en prenant $\alpha$ = 0,5 on diminue avantageusement le nombre N d'impulsions de tests pour obtenir une erreur inférieure au seuil que l'on s'est fixé.

Plus le nombre N est faible plus le temps de test est réduit ce qui est bien entendu très avantageux pour augmenter le nombre de débitmètres contrôlés ou testés pendant un laps de temps déterminé.

Comme le poids d'impulsion P dépend du débitmètre les seuls paramètres sur lesquels on peut agir sont t = $2^r$ (capacité de stockage de l'additionneur logique 26) et la fréquence d'addition f du signal AF.

Lorsque le débit diminue les inégalités (1) et (2) peuvent ne plus être respectées pour l'erreur X que l'on s'est fixée.

Compte tenu de ceci, lorsque P et t sont fixés, la Demanderesse s'est aperçue qu'il serait très judicieux de modifier la fréquence d'addition f du signal AF en l'asservissant à la valeur du débit mesuré afin que les inégalités (1) et (2) soient respectées et donc que Erq < X% lorsque le débit varie. Cet asservissement sera explicité par la suite en référence à la figure 7.

A titre d'exemple pour r = 16 bits et f = 256 Hz, le convertisseur ne pourra convertir un débit inférieur à 70,24 l/h avec une erreur inférieure à 0,1%. Pour r = 20 bits et f= 256 Hz, le convertisseur pourra couvrir une gamme de débit comprise entre 6 et 3600 l/h. Dans cet exemple, on constate que l'erreur est moyennée après deux impulsions. Cet exemple illustre en fait ce que l'on pouvait déduire des inéquations précédentes, à savoir que le nombre d'impulsions nécessaires pour que l'erreur soit inférieure au seuil prédéterminé (ex = 0,1%) est d'autant plus petit que la capacité de stockage de l'additionneur logique 26 est grande.

Toutefois, si l'on souhaite limiter la consommation électrique du dispositif de génération d'impulsions électriques selon l'invention, tout en s'assurant que l'erreur maximale autorisée pour la conversion n'est pas dépassée, il faut choisir les paramètres t = $2^r$ et f en conséquence.

Le choix du paramètre t résulte d'un compromis : d'une part la capacité de stockage ne doit pas être élevée afin de ne pas avoir une électronique trop volumineuse et donc trop consommatrice et, d'autre part la capacité de stockage ne doit pas être trop faible pour que le nombre d'impulsions N ne soit pas trop élevé compte tenu des inéquations (3) et (4).

Ce compromis est par exemple obtenu avec t = $2^{16}$.

La fréquence f du signal d'addition AF sera, quant à elle, asservie à la valeur du débit mesuré par le compteur de fluide qui sera fournie au microprocesseur 18.

A titre d'exemple, pour un compteur d'eau de calibre $Q_n$ = 1000 l/h, P = 25ml et avec r= 16 bits, la fréquence d'addition f du signal AF doit être asservie comme indiqué dans le tableau ci-dessous en fonction des débits mesurés afin de maintenir une erreur inférieure à 0,1 %.

| f(Hz) | 16 | 64 | 128 |
|---|---|---|---|
| Gamme de débits (l/h) | 5 à 24 | 24 à 96 | 96 à 2000 |
| Nombre minimum d'impulsions de test | 50 | 60 | > 60 |

Le convertisseur 10 comprend des moyens de sélection d'une fréquence d'addition 30 permettant de modifier la fréquence f du signal d'addition AF et qui sont représentés sur la figure 7.

Ces moyens comprennent un décodeur 32. Le décodeur comporte, d'une part trois entrées $A_0$, $A_1$, $A_2$ recevant respectivement trois signaux $D_1$, $D_2$, $D_3$ provenant du microprocesseur 18 et, d'autre part huit sorties $Y_0$ à $Y_7$.

Le décodeur comporte également une entrée CS1 reliée à l'alimentation et deux sorties CS2 et CS3 reliées à la masse. Par défaut, le microprocesseur 18 envoie trois signaux D1, D2 et D3 dans un état haut. Etant donné que l'entrée CS1 du décodeur 32 est soumise à la tension Vcc, l'ensemble des sorties $Y_0$ à $Y_6$ sont dans un état haut. La modification par le microprocesseur 18 de l'un ou plusieurs des signaux D1, D2 et D3 conduit à faire passer l'une des sorties $Y_0$ à $Y_6$ d'un état haut à un état bas.

Les moyens de sélection 30 comprennent également un circuit de verrouillage 34 comportant, d'une part huit entrées $D_0$ à $D_7$ dont les sept premières sont reliées respectivement aux sept sorties $Y_0$ à $Y_6$ du décodeur 32 (la huitième sortie $Y_7$ n'étant pas connectée) et, d'autre part huit sorties $Q_0$ à $Q_7$.

Le circuit 34 possède également une entrée d'horloge CLK recevant le signal de commande PSY ainsi qu'une entrée S et une entrée $D_7$ reliées à la masse 0.

Les moyens de sélection 30 comprennent en outre sept circuits d'inversion logique 36, 38, 40, 42, 44, 46, 48 respectivement connectés par leurs entrées aux sept premières sorties $Q_0$ à $Q_6$ du circuit de verrouillage 34 (la huitième sortie $Q_7$ n'étant pas utilisée). Sept portes logiques du type "ET" 50, 52, 54, 56, 58, 60, 62 complètent les moyens de sélection 30 et sont respectivement reliées par l'une de leurs deux entrées à la sortie du circuit d'inversion logique correspondent 36, 38, 40, 42, 44, 46, 48.

L'autre entrée de chaque porte logique reçoit respectivement un signal de fréquence égale à 8, 32, 64, 128, 256, 512 et 1024 Hz. Ces signaux étant fournis par le dispositif de la figure 4, décrit précédemment.

Une porte logique 64 de type "OU" reçoit sur chacune de ses entrées les sept sorties des portes logiques "ET" correspondantes 50 à 62 et délivre en sortie le signal d'addition AF de fréquence f.

En supposant que le microprocesseur 18 impose une fréquence égale à 16Hz comme fréquence d'addition pour la gamme de débits envisagée dans l'exemple précédent, c'est à dire de 5 à 24 l/h (voir tableau), les signaux logiques $D_1$, $D_2$, $D_3$ sont tous les trois à 0, ce qui a pour conséquence de faire passer $Y_0$ dans un état bas, toutes les sorties $Y_1$ à $Y_6$ restant dans un état haut. Ainsi, seule l'entrée $D_0$ du circuit de verrouillage 34 passe dans un état bas, les autres $D_1$ à $D_6$ restant dans un état haut.

Le front montant du signal de commande PSY permet le passage de la sortie $Q_0$ du circuit 34 dans un état bas et de toutes les autres sorties dans un état haut, ce qui permet de retrouver un état haut au niveau de la première entrée de la première porte logique "ET" 50 alors que toutes les autres premières entrées des autres portes logiques "ET" 52 à 62 sont dans un état bas.

Ainsi, le signal de fréquence égale à 16Hz est sélectionné et envoyé sur une entrée de la porte logique "OU" 64 alors que les autres entrées sont dans un état bas, ce qui permet, en sortie de cette porte, de sélectionner le signal de fréquence f du signal d'addition AF égale à 16Hz qui va rythmer les opérations d'addition et de report dans le bloc 20 des figures 2 et 5.

Par conséquent, les moyens de sélection d'une fréquence d'addition 30 permettent de modifier la fréquence d'addition. Ce changement de la fréquence d'addition est commandé par le microprocesseur 18. Ainsi l'association du microprocesseur et des moyens de sélection d'une fréquence d'addition permet de réaliser l'asservissement de la fréquence d'addition en fonction du débit mesuré c'est à dire de la valeur de l'entier $n_i$, la fréquence la plus adaptée étant sélectionnée par le microprocesseur 18 en fonction de la gamme de débits mesurée.

**Revendications**

**1.** Procédé de conversion d'une grandeur physique Q, mesurée par un appareil de mesure, en impulsions électriques représentatives chacune d'une quantité élémentaire P, ledit procédé comportant les étapes suivantes :

- mesurer la grandeur physique $Q_i$ à une fréquence d'échantillonnage $\underline{fe}$;

- calculer et coder sur un nombre $r$ de bits, un entier $n_i$ correspondant à la grandeur physique $Q_i$;
- additionner $m_i$ fois l'entier $n_i$ à lui-même à une fréquence d'addition $f$, grâce à des moyens d'addition dont la capacité de stockage est limitée à $t = 2^r$, $m_i$ correspondant au nombre d'additions à effectuer pour dépasser la capacité de stockage $t$ des moyens d'addition pour une valeur de $n_i$ donnée;

ledit procédé étant **caractérisé en ce qu'**il comporte en outre les étapes suivantes :

- générer lorsque la capacité de stockage des moyens d'addition est dépassée, d'une part une impulsion électrique et, d'autre part une erreur de fractionnement $x_i$ lorsque le rapport $Q_i$ / P n'est pas égal à un entier, de telle sorte que $x_i = (m_i \times n_i )/t$ ;
- reporter ladite erreur de fractionnement $x_i$ à une entrée des moyens d'addition pour l'additionner à l'entier $n_i$ si aucune nouvelle grandeur physique n'a été mesurée, ou à un nouvel entier $n_{i+1}$ représentatif d'une nouvelle grandeur physique mesurée $Q_{i+1}$ si une nouvelle grandeur physique a été mesurée; et
- répéter l'étape de génération d'impulsion électrique et d'erreur de fractionnement en sortie des moyens d'addition, et de report de l'erreur de fractionnement à l'entrée des moyens d'addition.

2. Procédé selon la revendication 1, **caractérisé en ce qu'**est généré un signal d'addition AF de fréquence $f$ à laquelle sont effectuées les étapes d'addition et de report, ladite fréquence $f$ étant modifiée en fonction de la grandeur physique mesurée afin de réaliser un asservissement de la fréquence $f$ en fonction de la valeur de la grandeur physique $Q_i$.

3. Procédé selon la revendication 1 ou 2, **caractérisé en ce que** l'entier $n_i$ est égal à

$$E\left(\frac{t \times Q_i}{f \times P} + \alpha\right),$$

où E (a) désigne la fonction mathématique partie entière de a et où $0 \le \alpha < 1$.

4. Procédé selon la revendication 3, selon lequel $\alpha = 0{,}5$.

5. Procédé selon la revendication 1, **caractérisé en ce qu'**est généré un signal de commande PSY dont la fréquence est la fréquence d'échantillonnage $fe$, ledit signal déclenchant à la fois les étapes de mesure d'une grandeur physique $Q_i$, d'addition de l'entier $n_i$, et de sélection de la fréquence $f$ du signal d'addition AF.

6. Dispositif de conversion (10) d'une grandeur physique Q, mesurée à une fréquence d'échantillonnage $fe$ par un appareil de mesure (12), en impulsions électriques représentatives chacune d'une quantité élémentaire P, ledit dispositif comportant :

- une unité de calcul (18) reliée à la sortie de l'appareil de mesure (12) destinée à calculer et à coder sur un nombre $r$ de bits, un entier $n_1$ correspondant à la grandeur physique $Q_i$; et
- une unité de conversion (20) reliée à la sortie de l'unité de calcul (18), destinée à générer une impulsion à chaque fois qu'une quantité élémentaire P a traversé l'appareil de mesure, l'ensemble des impulsions constituant un signal IMP dont la fréquence est représentative de la grandeur physique, ladite unité de conversion (20) comprend des moyens d'addition (26) dont la capacité de stockage est limitée à $t = 2^r$,

lesdits moyens d'addition (26) étant **caractérisés en ce qu'**ils comportent deux entrées $E_1$, $E_2$ et deux sorties $S_1$, $S_2$ :

- l'entrée $E_1$ étant reliée à l'unité de calcul (18) et recevant l'entier $n_i$;
- la sortie $S_1$ fournissant soit le résultat de l'addition des deux entrées ($E_1$, $E_2$), soit une erreur de fractionnement $x_i$ lorsque le rapport $Q_i$ / P n'est pas égal à un entier et que la capacité de stockage des moyens d'addition (26) est dépassée;
- l'entrée $E_2$ étant reliée à la sortie $S_1$ afin que le résultat de la sortie $S_1$ soit reporté à l'entrée $E_2$, de telle sorte que d'une part les moyens d'addition (26) puissent additionner $m_i$ fois l'entier $n_i$ à lui même, $m_i$ correspondant au nombre d'addition à effectuer pour dépasser la capacité de stockage $t$ des moyens d'addition (26), et d'autre part que l'erreur de fractionnement $x_i$ généré à la sortie $S_1$ puisse être reportée à l'entrée $E_2$; et

- la sortie $S_2$ générant le signal IMP lorsque la capacité de stockage des moyens d'addition (26) est dépassée.

7. Dispositif selon la revendication 6, **caractérisé en ce qu'**il comprend en outre des moyens de sélection (30) d'un signal d'addition AF de fréquence $\underline{f}$ à laquelle sont effectuées les additions et les reports, ladite fréquence $\underline{f}$ étant modifiée en fonction de la grandeur physique $Q_i$ mesurée afin de réaliser un asservissement de la fréquence $\underline{f}$ en fonction de la valeur de la grandeur physique.

8. Dispositif selon la revendication 7, **caractérisé en ce que** les moyens de sélection (30) sont commandés par un signal de commande PSY.

9. Dispositif selon la revendication 7, **caractérisé en ce que** les moyens de sélection (30) comportent :

    - un décodeur (32) relié à l'unité de calcul (18);
    - un circuit de verrouillage (34) dont les entrées sont reliées au décodeur;
    - un ensemble de portes logiques de type "ET" (50, 52, 54, 56, 58, 60, 62) comprenant deux entrées, l'une recevant un signal de fréquence prédéterminée, l'autre un signal de sélection provenant du décodeur (32) et destiné à activer une seule desdites portes logique de type "ET"; et
    - une porte logique de type "OU" (64) reliée à chacune des sorties des portes logiques de type "ET" et délivrant en sortie le signal de fréquence prédéterminée fourni par l'une desdites portes logiques de type "ET".

10. Dispositif selon la revendication 9, **caractérisé en ce que** l'unité de calcul (18) commande l'envoie par le décodeur (32) du signal de sélection destiné à activer l'une des portes logiques de type "ET".

11. Dispositif selon la revendication 6, **caractérisé en ce que** les moyens d'addition (26) sont constitués d'additionneurs logiques (26a, 26b, 26c, 26d).

12. Dispositif selon la revendication 6, **caractérisé en ce que** l'unité de conversion (20) comprend en outre des premiers moyens de verrouillage (22, 22a, 22b) disposés entre l'unité de calcul (18) de l'entier $n_i$ et l'entrée $E_1$ des moyens d'addition (26), lesdits premiers moyens de verrouillage autorisant l'accès dudit entier $n_i$ vers les moyens d'addition sous le contrôle d'un signal de commande PSY.

13. Dispositif selon la revendication 12, **caractérisé en ce que** l'unité de conversion (20) comprend des deuxièmes moyens de verrouillage (24, 24a, 24b) disposés entre les premiers moyens de verrouillage (22, 22a, 22b) et l'entrée $E_1$ des moyens d'addition (26) qui reçoivent l'entier $n_i$ lorsque l'autorisation d'accès est donnée par le signal de commande PSY, lesdits deuxième moyens de verrouillage autorisant le report de cet entier à l'entrée $E_1$ des moyens d'addition (26) au rythme de la fréquence $\underline{f}$ du signal d'addition AF.

14. Dispositif selon la revendication 12 ou 13, **caractérisé en ce que** le dispositif comprend des troisièmes moyens de verrouillage (28, 28a, 28b) disposés entre la sortie $S_1$ et l'entrée $E_2$ des moyens d'addition (26), lesdits moyens de verrouillage autorisant le report de la valeur de la sortie S1 à l'entrée $E_2$ au rythme de la fréquence $\underline{f}$ du signal d'addition AF.

15. Dispositif selon l'une des revendications 12 à 14, **caractérisé en ce qu'**au moins un moyen parmi les premiers, deuxièmes et troisièmes moyens de verrouillage (22, 24, 28) est constitué de bascules.

16. Dispositif selon l'une des revendications 6 à 15, **caractérisé en ce que** l'entier ni est égal à

$$E\left(\frac{t \times Q_i}{f \times P} + \alpha\right),$$

où E(a) désigne la fonction mathématique partie entière de a et où $0 \leq \alpha < 1$.

17. Dispositif selon la revendication 16, selon lequel $\alpha = 0,5$.

**Patentansprüche**

1. Umwandlungsverfahren einer physikalischen Größe Q, die von einem Messgerät gemessen wurde, mit typischen elektrischen Impulsen, wobei jeder Impuls eine Elementargröße P aufweist und das besagte Verfahren folgende Schritte umfasst:

   - Messen der physikalischen Größe $Q_i$ mit einer Abtastfrequenz $\underline{fe}$;
   - Berechnung und Codierung, bei einer Anzahl von $\underline{r}$ Bits, einer ganzen Zahl $n_i$, die der physikalischen Größe $Q_i$ entspricht;
   - Addieren von $m_i$ Mal der ganzen Zahl $n_i$ zu der Zahl selbst, bei einer Additionsfrequenz $\underline{f}$, dank des Einsatzes von Additionsmitteln, deren Speicherkapazität auf $t = 2^r$ begrenzt ist, wobei $m_i$ der Anzahl der Additionen entspricht, die durchgeführt werden müssen, um die Speicherkapazität $\underline{t}$ der Additionsmittel für einen vorgegebenen Wert $n_i$ zu überschreiten;

   Das besagte Verfahren ist **dadurch gekennzeichnet, dass** es außerdem die folgenden Schritte umfasst:

   - Erzeugung, wenn die Speicherkapazität der Additionsmittel überschritten wurde, einerseits eines elektrischen Impulses und andererseits eines Teilungsfehlers $x_i$, wenn das Verhältnis $Q_i/P$ nicht einer ganzen Zahl entspricht, und zwar so, dass $x_i = (m_i \times n_i)/t$ ist;
   - Übertragen des besagten Teilungsfehlers $x_i$ auf einen Eingang der Additionsmittel, um ihn zu der ganzen Zahl $n_i$ zu addieren, wenn keine neue physikalische Größe gemessen wurde, oder bei einer neuen typischen ganzen Zahl $n_{i+1}$ einer neuen gemessenen physikalischen Größe $Q_{i+1}$, wenn eine neue physikalische Größe gemessen wurde; und
   - Wiederholen des Schrittes zur Erzeugung eines elektrischen Impulses und eines Teilungsfehlers am Ausgang der Additionsmittel und des Übertragsschrittes des Teilungsfehlers am Eingang der Additionsmittel.

2. Verfahren nach Anspruch 1, **dadurch gekennzeichnet, dass** ein Additionssignal AF mit der Frequenz $\underline{f}$ erzeugt wird, bei der die Additions- und Übertragsschritte ausgeführt werden, wobei die Frequenz $\underline{f}$ entsprechend der gemessenen physikalischen Größe geändert wird, um eine Regelung der Frequenz $\underline{f}$ entsprechend des Wertes der physikalischen Größe $Q_i$ durchzuführen.

3. Verfahren nach Anspruch 1 oder 2, **dadurch gekennzeichnet, dass** die ganze Zahl $n_i$ der Gleichung

$$ \mathrm{E} \quad \left( \frac{txQ_i}{fxP} + \alpha \right) $$

entspricht, wobei E (a) die mathematische Funktion des ganzen Teils von a bestimmt und wobei $0 \leq \alpha < 1$ ist.

4. Verfahren nach Anspruch 3, wobei $\alpha = 0{,}5$ ist.

5. Verfahren nach Anspruch 1, **dadurch gekennzeichnet, dass** ein Steuersignal PSY erzeugt wird, dessen Frequenz der Abtastfrequenz $\underline{fe}$ entspricht, wobei das besagte Signal gleichzeitig die Schritte für die Messung einer physikalischen Größe $Q_i$ für die Addition der ganzen Zahl $n_i$ auslöst und für die Auswahl der Frequenz $\underline{f}$ des Additionssignals AF.

6. Umwandlungsvorrichtung (10) mit einer physikalischen Größe $Q_i$, die bei einer Abtastfrequenz $\underline{fe}$ von einem Messgerät (12) gemessen wurde, mit typischen elektrischen Impulsen, wobei jeder Impuls eine Elementarmenge P aufweist und die Vorrichtung Folgendes umfasst :

   - ein Rechenwerk (18), das mit dem Ausgang des Messgerätes (12) verbunden ist, das zur Berechnung und Codierung, bei einer Anzahl von $\underline{r}$ Bits, einer ganzen Zahl $n_1$ bestimmt ist, die der physikalischen Größe $Q_i$ entspricht; und
   - eine Umwandlungseinheit (20), die mit dem Ausgang des Rechenwerkes (18) verbunden ist, die zur Erzeugung eines Impulses bestimmt ist und zwar jedes Mal, wenn eine Elementarmenge P das Messgerät durchquert hat, wobei die Menge der Impulse ein Signal IMP bilden, dessen Frequenz typisch für die physikalische Größe ist, wobei die besagte Umwandlungseinheit (20) Additionsmittel (26) umfasst, deren Speicherkapazität auf t'

= $2^r$ begrenzt ist, wobei die besagten Additionsmittel (26) **dadurch gekennzeichnet sind, dass** sie zwei Eingänge $E_1$, $E_2$ und zwei Ausgänge $S_1$ und $S_2$ umfassen:

- der Eingang $E_1$ ist mit dem Rechenwerk (18) verbunden und erhält die ganze Zahl $n_i$;
- der Ausgang $S_1$ liefert entweder das Ergebnis der Addition der beiden Eingänge ($E_1$, $E_2$) oder einen Teilungsfehler $x_i$, wenn das Verhältnis $Q_i/P$ nicht einer ganzen Zahl entspricht und die Speicherkapazität der Additionsmittel (26) überschritten wird;
- der Eingang $E_2$ ist mit dem Ausgang $S_1$ verbunden, damit das Ergebnis des Ausgangs $S_1$ auf den Eingang $E_2$ übertragen wird und zwar so, dass einerseits die Additionsmittel (26) $m_i$ Mal die ganze Zahl $n_i$ zu sich selbst addieren können, wobei $m_i$ der Anzahl der durchzuführenden Addition entspricht, um die Speicherkapazität $\underline{t}$ der Additionsmittel (26) zu überschreiten und andererseits, der Teilungsfehler $x_i$, der am Ausgang $S_i$ erzeugt wird, an den Eingang $E_2$ übertragen werden kann; und
- der Ausgang $S_2$, der das Signal IMP erzeugt, wenn die Speicherkapazität der Additionsmittel (26) überschritten wird.

7. Vorrichtung nach Anspruch 6, **dadurch gekennzeichnet, dass** sie außerdem Auswahlhilfsmittel (30) eines Additionssignals AF mit der Frequenz $\underline{f}$ umfasst, bei der die Additionen und Überträge durchgeführt werden, wobei die besagte Frequenz $\underline{f}$ entsprechend der gemessenen physikalischen Größe $Q_i$ geändert wird, um eine Regelung der Frequenz $\underline{f}$ entsprechend dem Wert der physikalischen Größe durchzuführen.

8. Vorrichtung nach Anspruch 7, **dadurch gekennzeichnet, dass** die Auswahlhilfsmittel (30) von einem Steuersignal PSY gesteuert werden.

9. Vorrichtung nach Anspruch 7, **dadurch gekennzeichnet, dass** die Auswahlhilfsmittel (30) Folgendes umfassen.

- einen Decoder (32), der mit dem Rechenwerk (18) verbunden ist;
- eine Sperrschaltung (34), deren Eingänge mit dem Decoder verbunden sind;
- eine Gruppe von Verknüpfungsschaltungen vom Typ "UND" (50, 52, 54, 56, 58, 60, 62), die zwei Eingänge umfassen, wobei ein Eingang ein Signal mit einer vorher festgelegten Frequenz empfängt und der andere ein Auswahlsignal, das vom Decoder (32) übertragen wird und zur Aktivierung einer der besagten Verknüpfungsschaltungen vom Typ "UND" bestimmt ist; und
- eine Verknüpfungsschaltung vom Typ "ODER" (64), die mit jedem Ausgang der Verknüpfungsschaltungen vom Typ "UND" verbunden ist und am Ausgang das Signal mit der vorher festgelegten Frequenz liefert, das von einer der besagten Verknüpfungsschaltungen vom Typ "UND" übertragen wird.

10. Vorrichtung nach Anspruch 9, **dadurch gekennzeichnet, dass** das Rechenwerk (18) die Übertragung durch den Decoder (32) des Auswahlsignals steuert, das zur Aktivierung einer der Verknüpfungsschaltungen vom Typ "UND" bestimmt ist.

11. Vorrichtung nach Anspruch 6, **dadurch gekennzeichnet, dass** die Additionsmittel (26) aus Logikaddierern (26a, 26b, 26c, 26d) bestehen.

12. Vorrichtung nach Anspruch 6, **dadurch gekennzeichnet, dass** die Umwandlungseinheit (20) außerdem erste Sperrmittel (22, 22a, 22b) umfasst, die zwischen dem Rechenwerk (18) der ganzen Zahl $n_i$ und dem Eingang $E_1$ der Additionsmittel (26) angeordnet sind, wobei die besagten ersten Sperrmittel den Zugriff der besagten ganzen Zahl $n_i$ auf die Additionsmittel genehmigen, unter der Kontrolle eines Steuersignals PSY.

13. Vorrichtung nach Anspruch 12, **dadurch gekennzeichnet, dass** die Umwandlungseinheit (20) zweite Sperrmittel (24, 24a, 24b) umfasst, die zwischen den ersten Sperrmitteln (22, 22a, 22b) und dem Eingang $E_i$ der Additionsmittel (26) angeordnet sind, welche die ganze Zahl $n_i$ aufnehmen, wenn das Steuersignal PSY die Genehmigung für den Zugriff erteilt hat, wobei die besagten zweiten Sperrmittel den Übertrag dieser ganzen Zahl an den Eingang $E_i$ der Additionsmittel (26) im Takt der Frequenz $\underline{f}$ des Additionssignals AF genehmigen.

14. Vorrichtung nach Anspruch 12 oder 13, **dadurch gekennzeichnet, dass** die Vorrichtung dritte Sperrmittel (28, 28a, 28b) umfasst, die zwischen dem Ausgang $S_1$ und dem Eingang $E_2$ der Additionsmittel (26) angeordnet sind, wobei die besagten Sperrmittel den Übertrag des Wertes des Ausgangs S1 an den Eingang $E_2$ im Takt der Frequenz $\underline{f}$ des Additionssignals AF genehmigen.

**15.** Vorrichtung nach einem der Ansprüche 12 bis 14, **dadurch gekennzeichnet, dass** mindestens ein Mittel von den ersten, zweiten und dritten Sperrmitteln (22, 24, 28) aus Kippschaltungen besteht.

**16.** Vorrichtung nach einem der Ansprüche 6 bis 15, **dadurch gekennzeichnet, dass** die ganze Zahl $n_i$ der Gleichung

$$\left( \frac{txQ_i}{fxP} + \alpha \right)$$

entspricht, wobei E(a) die mathematische Funktion des ganzen Teils von a bestimmt und wobei $0 \leq \alpha < 1$ ist.

**17.** Vorrichtung nach Anspruch 16, demzufolge $\alpha = 0{,}5$ ist.

**Claims**

**1.** A method for converting a physical quantity Q, measured with a measuring apparatus, into electrical pulses each representative of an elementary quantity P, said method consisting of the following steps:

- measuring the physical quantity $Q_i$ at a sampling frequency $\underline{fe}$;
- computing and coding on a number $\underline{r}$ of bits, an integer $n_i$ corresponding to the physical quantity $Q_i$;
- adding the integer $n_i$ to itself $m_j$ times with an adding frequency $\underline{s}$, by adding means, the storing capacity of which is limited to $t = 2^r$, $m_i$ corresponding to the number of additions to be performed for exceeding the storage capacity $\underline{t}$ of the adding means for a given value of $n_i$;

  said method being **characterized in that** it further consists of the following steps:

- generating an electrical pulse on the one hand, when the storage capacity of the adding means is exceeded, and on the other hand a splitting error $x_i$ when the $Q_i/P$ ratio is not equal to an integer, so that $x_i = (m_i \times n_i)/t$;
- carrying said splitting error $x_i$ to an input of the adding means for adding it to integer $n_i$ if no new physical quantity was measured, or to a new integer $n_{i+1}$ representative of a new measured physical quantity $Q_{i+1}$ if a new physical quantity was measured; and
- repeating the step for generating an electrical pulse and a splitting error at the output of the adding means, and for carrying the splitting error to the input of the adding means.

**2.** The method according to claim 1, **characterized in that** an additional signal AF is generated with frequency $\underline{f}$, at which the addition and carrying steps are performed, said frequency $\underline{f}$ being changed according to the measured physical unit in order to achieve feedback control of frequency $\underline{f}$ according to the value of physical quantity $Q_i$.

**3.** The method according to claim 1 or 2, **characterized in that** integer $n_i$ is equal to

$$E\left( \frac{t \times Q_i}{f \times P} + \alpha \right),$$

wherein E(a) means the mathematical function, integral part of a and wherein $0 \leq \alpha < 1$.

**4.** The method according to claim 3, according to which $\alpha = 0.5$.

**5.** The method according to claim 1, **characterized in that** a control signal PSY is generated, the frequency of which is the sampling frequency $\underline{fe}$, said signal triggering both the steps for measuring a physical quantity $Q_i$, for adding the integer $n_i$ and for selecting the frequency $\underline{f}$ of the addition signal AF.

**6.** A device (10) for converting a physical quantity $Q_i$ measured with a measuring apparatus (12) at a sampling frequency $\underline{fe}$, into electrical pulses each representative of an elementary quantity P, said device consisting of:

- a computing unit (18) connected to the output of the measuring apparatus (12) for computing and coding on a number r of bits, an integer $n_i$ corresponding to the physical quantity $Q_i$; and
- a conversion unit (20) connected to the output of the computing unit (18), for generating a pulse whenever an elementary amount P has crossed the measuring apparatus, the whole of the pulses forming a IMP signal, the frequency of which is representative of the physical quantity, said conversion unit (20) comprises adding means (26) the storage capacity of which is limited to $t = 2^r$, said adding means (26) being **characterized in that** they consist of two inputs $E_1$, $E_2$ and two outputs $S_1$, $S_2$:

- the input $E_1$ being connected to the computing unit (18) and receiving integer $n_i$;
- the output $S_i$ providing either the result of the adding of both inputs ($E_1$, $E_2$) or a splitting error $x_i$ when the $Q_i$/P ratio is not equal to an integer and when the storage capacity of the adding means (26) is exceeded;
- the input $E_2$ being connected to the output $S_1$, so that the result of output $S_1$ is carried over to input $E_2$, so that on the one hand the adding means (26) may add the integer $n_i$ to itself $m_i$ times, $m_i$ corresponding to the number of additions performed, in order to exceed the storage capacity t of the adding means (26), and on the other hand, so that the splitting error $x_i$ generated at output $S_1$ may be carried over to input $E_2$; and
- the output $S_2$ generating the IMP signal when the storage capacity of the adding means (26) is exceeded.

7. The device according to claim 6, **characterized in that** it further comprises selection means (30) for an addition signal AF of frequency $\underline{f}$ at which the addition and carry-overs are performed, said frequency $\underline{f}$ being changed according to the measured physical quantity $Q_i$ in order to achieve feedback control of the frequency according to the value of the physical quantity.

8. The device according to claim 7, **characterized in that**, the selection means (30) are controlled by a control signal PSY.

9. The device according to claim 7, **characterized in that** the selection means (30) consist of:

- a decoder (32) connected to the computing unit (18) ;
- a locking circuit (34) the inputs of which are connected to the decoder;
- a set of logical gates of the "AND" type (50, 52, 54, 56, 58, 60, 62) comprising two inputs, one receiving a predetermined frequency signal, the other one a selection signal from the decoder (32) and for activating only one of said logical "AND" type gates; and
- a logical gate of the "OR" type (64) connected to each of the outputs of the logical "AND" type gates and delivering at the output the predetermined frequency signal provided by one of said logical "AND" type gates.

10. The device according to claim 9, **characterized in that**, the computing unit (18) controls the sending by the decoder (32) of the selection signal for activating one of the logical gates of the "AND" type.

11. The device according to claim 6, **characterized in that** the additional means (26) are made up of logical adders (26a, 26b, 26c, 26d).

12. The device according to claim 6, **characterized in that** the conversion unit (20) further comprises first locking means (22, 22a, 22b) positioned between the computing unit (18) of integer $n_i$ and the input $E_1$ of the adding means (26), said first locking means authorizing access of said integer $n_i$ to the adding means under the control of a control signal PSY.

13. The device according to claim 12, **characterized in that** the conversion unit (20) comprises second locking means (24, 24a, 24b) positioned between the first locking means (22, 22a, 22b) and the input $E_1$ of adding means (26) which receive the integer $n_i$ when access authorization is given by the control signal PSY, said second locking means authorizing the carry over of this integer to the input $E_1$ of the adding means (26) at the rate of frequency $\underline{f}$ of the addition signal AF.

14. The device according to claim 12 or 13, **characterized in that**, the device comprises third locking means (28, 28a, 28b) positioned between the output $S_1$ and the input $E_2$ of the adding means (26), said locking means authorizing the carry over of the value of output $S_1$ to the input $E_2$ at the rate of the frequency $\underline{f}$ of the addition signal AF.

15. The device according to any of claims 12 to 14, **characterized in that**, at least one of the first, second and third locking means (22, 24, 28) is made up of flip-flops.

**16.** The device according to any of claims 6 to 15, **characterized in that** the integer $n_i$ is equal to

$$E\left(\frac{t \times Q_i}{f \times P} + \alpha\right),$$

wherein E(a) means the mathematical function, integral part of a and wherein $0 \leq \alpha < 1$.

**17.** The device according to claim 16, according to which $\alpha = 0.5$.

Fig. 1

Fig. 2

Fig. 3

Fig. 4

EP 1 240 482 B1

Fig. 5

EP 1 240 482 B1

Fig. 6

Fig. 7